# EUROPÄISCHE PATENTSCHRIFT

(11) **EP 3 835 528 B1**
(45) Veröffentlichungstag und Bekanntmachung des Hinweises auf die Patenterteilung: **12.02.2025**
(21) Anmeldenummer: 19214422.8
(22) Anmeldetag: 09.12.2019
(51) Int. Cl.: E05F 15/603, E05F 15/611, E05F 15/632, E05F 15/643, H02K 5/04, H02K 1/18, H02K 7/116

(54) **TÜRANLAGE MIT EINER MOTOREINHEIT, AUFWEISEND EINE VORTEILHAFTE GRUNDFORM**
DOOR ASSEMBLY WITH A MOTOR UNIT HAVING A BENEFICIAL BASIC DESIGN
ENSEMBLE DE PORTE DOTÉ D'UNE UNITÉ MOTEUR, PRÉSENTANT UNE FORME BASIQUE AVANTAGEUSE

(43) Veröffentlichungstag der Anmeldung: 16.06.2021
(73) Patentinhaber: dormakaba Deutschland GmbH, 58256 Ennepetal (DE)
(72) Erfinder: Finke, Andreas, 58256 Ennepetal (DE); Finis, Dietmar, 58256 Ennepetal (DE); Wagner, Martin, 58256 Ennepetal (DE); Busch, Sven, 58256 Ennepetal (DE)
(74) Vertreter: Balder IP Law, S.L.

(56) Entgegenhaltungen:
- EP-A1- 3 534 504
- EP-A2- 2 757 219
- DE-A1- 10 024 021
- DE-A1- 102014 115 921
- US-A1- 2005 274 078
- US-B2- 8 823 232

## Beschreibung

Die Erfindung betrifft eine Türanlage mit einem Türantrieb, aufweisend eine Motoreinheit mit einem Gehäuse, in dem ein Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung bringbar ist. Weiterhin betrifft die Erfindung eine Türanlage mit einem solchen Türantrieb, aufweisend wenigstens ein Flügelelement, mit dem der Türantrieb antreibend in Wirkverbindung steht.

Aus der DE 10 2008 046 062 A1 ist ein Türantrieb zur Anordnung an einer Türanlage bekannt, und der Antrieb dient zur Bewegung von Flügelelementen der Türanlage, die als automatische Schiebetür ausgebildet ist. Der Türantrieb weist hierfür eine Motoreinheit mit einem Gehäuse auf, und an das Gehäuse der Motoreinheit ist eine Getriebeeinheit angebracht, die als Schneckenradgetriebe ausgeführt ist. Damit ist die Motoreinheit als schnelldrehender Motor konzipiert, und mit der Getriebeeinheit wird die höhere Drehzahl des Rotors der Motoreinheit reduziert auf eine geringere Drehzahl zum Antrieb einer Riemenscheibe, die auf eine Abtriebswelle der Getriebeeinheit aufgesetzt ist.

Über die Riemenscheibe wird ein Zahnriemen gelegt, der mit den Flügelelementen der automatischen Schiebetür verbunden wird. Da die Motoreinheit schnelldrehend ausgelegt ist, und die Drehzahl auf die Riemenscheibe reduziert werden muss, ist in Verbindung mit dem Motor die Getriebeeinheit notwendig, wodurch zusätzlicher Bauraum erforderlich wird, und wodurch die Konstruktion des Türantriebs komplexer wird. Die räumliche Dimensionierung des Türantriebs muss an die Notwendigkeit der Getriebeeinheit angepasst werden, und da der Motor eine zylinderförmige Grundform aufweist, nimmt dieser einen Bauraum ein, der in Bezug auf seine Einbauumgebung keine optimale Raumnutzung ermöglicht. Gleiches gilt für ein Schneckenradgetriebe, das insbesondere in Verbindung mit dem Motor sehr bauraumintensiv ist.

Einen weiteren Türantrieb offenbart die DE 10 2014 115 932 A1, und der Türantrieb weist als Grundkörper einen einteiligen quaderförmigen Körper auf, in den Aussparungen zu der Aufnahme einer Motoreinheit und einer Getriebestufe eingebracht sind. Zur weiteren Aufnahme einer Steuerung, einem Netzteil und dergleichen sind in dem Block weitere Aussparungen und Öffnungen vorgesehen. Der quaderförmige Körper bildet also ein Gehäuse als Träger der einzelnen Komponenten des Türantriebes und ist über der gesamten Abmessung des Antriebes einteilig und gewissermaßen monolithisch ausgeführt.

Aus der DE 10 2014 115 921 A1 ist ein Türantrieb mit einer Antriebseinheit bekannt, wobei die Antriebseinheit zumindest einen elektrischen Antrieb umfasst. Weiterhin weist die Antriebseinheit ein Gehäuse auf. Das Gehäuse weist eine Gehäuseausnehmung auf, in die eine Steuerungsvorrichtung einbringbar ist. Auch die Antriebseinheit und ein Getriebe sind in die Gehäuseausnehmung einbringbar. Das Gehäuse der Antriebseinheit ist durch einen Grundkörper des Türantriebs selbst gebildet.

Aus der EP 2 757 219 A2 ist ein Türantrieb für eine Türanlage bekannt.

Grundsätzlich wird bei der Konstruktion von Türantrieben zur Anordnung an oder zur Anordnung in Verbindung mit einer Türanlage das Ziel verfolgt, den Türantrieb möglichst kompakt und mit kleinen Abmessungen auszuführen, beispielsweise indem eine Getriebeeinheit oder eine Getriebestufe innerhalb des Türantriebs bereits vermieden wird. Türantriebe werden üblicherweise oberhalb der linear bewegbaren Flügelelemente einer automatischen Schiebetüranlage angeordnet und weisen ein Trägerprofil auf, das einen Grundkörper der Türanlage bildet und am Trägerprofil werden der Türantrieb integriert montiert und gleichermaßen die Flügelelemente linear geführt. Als Verbindungsmittel zwischen dem Türantrieb und den Flügelelementen dient in der Regel ein Zahnriemen, wobei auch andere Zugmittel wie Kettenverbindungen und dergleichen möglich sind. Der Türantrieb bildet dabei mit wenigstens dem Motor, einem Netzteil und einer Steuerung eine eigene Baueinheit, die mit der Anordnung am Trägerprofil in die Türanlage integriert wird.

Um das Trägerprofil mit einer entsprechenden Blende, einem Gehäuse oder sonstigen Umbauteilen möglichst kleinbauend auszuführen, ist es von Vorteil, auch und insbesondere den Türantrieb selbst möglichst kompakt und mit kleinen Abmessungen auszuführen. Da jedoch Flügelelemente aus Glas große Massen erreichen können, muss der Türantrieb eine hohe Leistungsdichte aufweisen, um derartige Flügelelemente entsprechend stark beschleunigen und auch wieder verzögern zu können, damit die Türanlage auch mit großen Flügelelementen noch eine angemessene Dynamik erreicht.

Für eine hohe Leistungsdichte und insbesondere einen geräuscharmen Betrieb bieten sich Motoreinheiten in Verbindung mit einem Zahnriemen als Direktantriebe an, bei denen auf der Abtriebswelle der Motoreinheit unmittelbar die Riemenscheibe aufgebracht wird, über die der Zahnriemen gelegt wird, der wiederum unmittelbar mit den Flügelelementen in Verbindung steht. Dadurch kann der Türantrieb geräuschminimal betrieben werden, da keine hohen Motordrehzahlen erreicht werden, und bei entsprechender Auslegung der Motoreinheit können Leistungsdichten bereitgestellt werden, die hinreichend sind, um Flügelelemente von beispielsweise 200kg bis 250kg für den Betrieb einer automatischen Schiebetür hinreichend stark zu beschleunigen und auch wieder zu verzögern.

Motor-Getriebeeinheiten mit einer zylinderförmigen Motoraußenform und einem quer dazu liegenden Schneckendrahtgetriebe ermöglichen keine besonders hohe Integrationsdichte, insbesondere in Bezug auf die bereitstellbare Ausgangsleistung an der Abtriebswelle. Ferner gestaltet sich die weitere kompakte Anordnung eines Netzteiles, einer Steuerung und beispielsweise eines Bedienteils unter Einhaltung einer hohen Integrationsdichte als schwierig.

Aufgabe der Erfindung ist die Schaffung eines Türantriebs mit einer Motoreinheit, die eine hohe Integrationsdichte und eine hohe Leistungsdichte aufweist, und wobei der Motor in Verbindung mit dem wenigstens einen Flügelelement insbesondere als Direktantrieb ausgeführt sein soll. Die hohe Integrationsdichte des Türantriebes soll zudem auch in der Anordnung der Motoreinheit in Verbindung mit einem Netzteil und einer Steuerung erreicht werden, sowie mit weiteren Komponenten, beispielsweise einem Bedienteil. Dabei soll ferner Berücksichtigung finden, dass der Türantrieb möglichst ohne größeren Raumbedarf in ein Trägerprofil einer Türanlage integriert werden kann, insbesondere um letzteres mit kleineren Abmessungen auszuführen.

Diese Aufgabe wird ausgehend von einer Türanlage mit einem Türantrieb gemäß Anspruch 1 mit den jeweils kennzeichnenden Merkmalen gelöst. Vorteilhafte Weiterbildungen der Erfindung sind in den abhängigen Ansprüchen und in der Beschreibung angegeben.

Die Erfindung schließt die technische Lehre ein, dass die Motoreinheit die Grundform eines Quaders aufweist, der wenigstens mittels zweier miteinander verbundener Gehäusehälften gebildet ist.

Ein Quader im Sinne der Erfindung ist ein Körper, der von sechs Rechteckflächen begrenzt wird, wobei die Rechteckflächen im Wesentlichen, aber nicht vollständig plan sein sollten, also durchaus Anformungen, Wölbungen, Schrägungen, Rippen und dergleichen aufweisen können. Insofern ist im Sinne der Erfindung die Quaderform der Motoreinheit allenfalls annähernd im mathematischen Sinne zu verstehen; ein Rechteckkörper mit leichten Winkelabweichungen und Formabweichungen fällt damit auch noch unter dem Begriff des Quaders, ohne also am mathematischen Begriff eines Quaders zu haften. Da erfindungsgemäß auch nur die Grundform der Motoreinheit einen Quader bilden soll, kann die Grundform auch als eine Hüllform zu verstehen sein, ohne dass das Gehäuse der Motoreinheit die quaderförmige Hüllform exakt abbildet.

Die erfindungsgemäß ausgestaltete Motoreinheit kann mit der Quaderform auf vorteilhafte Weise in einen Türantrieb integriert werden, und durch die gebildeten Seitenflächen, die Stirnfläche, sowie eine plane Rückseite ermöglichen einen einfachen Aufbau des Türantriebs mit unmittelbar angrenzenden weiteren Komponenten, insbesondere Komponenten wie das Netzteil, die Steuerung und dergleichen. Insbesondere lässt sich ein quaderförmiger Körper besonders vorteilhaft in oder an einem Trägerprofil anordnen, sodass der Türantrieb insgesamt mit kleineren Abmessungen dimensioniert werden kann.

Die Gehäusehälften können halbschalenförmig ausgeführt sein, und werden die Gehäusehälften miteinander verbunden, vervollständigt sich der so gebildete Gehäusekörper zu einem Quader. Die Gehäusehälften müssen dabei nicht zwingend eine exakte Hälfte des Gehäuses bilden, und die Teilungsebene zwischen den Gehäusehälften muss nicht auf einer halben Höhe einer Höhenkante des Quaders liegen. Insofern können auch Gehäusehälften vorgesehen sein, die unterschiedlich bemaßt, gestaltet und dimensioniert sind, diese können jedoch in einer Weise aufeinander gebracht und verbunden werden, dass der Quader zur Bildung des Gehäuses entsteht, und so die Grundform der Motoreinheit bildet.

Die Gehäusehälften sind so ausgestaltet, dass wenigstens der Stator und der Rotor innenseitig zwischen den Gehäusehälften aufgenommen sind. Die Gehäusehälften sind schalenartig ausgeführt, und diese werden unmittelbar miteinander verbunden, so dass ein umlaufender etwa rechteckförmiger Rand der jeweiligen Gehäusehälfte aufeinander gefügt wird.

Erfindungsgemäß weist der Quader eine Längskante, eine Breitenkante und eine Höhenkante auf, wobei die Längskante größer ist als die Breitenkante und/oder wobei die Breitenkante größer ist als die Höhenkante. Beispielsweise weist die Breitenkante eine Länge von 70 % bis 98 %, insbesondere von 85 % bis 95 % von der Länge der Längskante auf. Die Höhenkante weist eine Länge von 30 % bis 60 %, insbesondere von 40 % bis 50 % von der Länge der Längskante auf. Beträgt die Länge der Längskante beispielsweise 100mm, so weist die Breitenkante eine Länge von beispielsweise 90mm auf, und die Höhenkante weist eine Länge von beispielsweise 40 mm bis 50 mm auf.

Insbesondere dann, wenn die Breitenkante ein geringeres Maß aufweist als die Längskante, kann die Motoreinheit im Türantrieb so integriert werden, dass die Breitenkante sich in der Vertikalen erstreckt, sodass der Türantrieb insbesondere in Anordnung über den Flügelelementen mit einer geringen Bauhöhe ausgelegt werde kann, die bestimmt ist durch die Bauhöhe des Türantriebs, und die Bauhöhe des Türabtriebs ist wiederum bestimmt durch die Breite der Motoreinheit, also durch die Länge der Breitenkante.

Mit weiterem Vorteil spannen die Längskante und die Breitenkante eine Stirnfläche auf, wobei die Abtriebswelle senkrecht auf der Stirnfläche hervorsteht. Auf dem hervorstehenden Abschnitt der Abtriebswelle ist eine Riemenscheibe aufgebracht, und die Stirnfläche kann frei von Befestigungsmitteln ausgeführt sein, sodass der Riemen möglichst nah über der Stirnfläche geführt werden kann, wenn die Riemenscheibe bis vor die Stirnfläche geführt ist.

Mit weiterem Vorteil weist der Türantrieb wenigstens ein Netzteil und wenigstens eine Steuerung auf, wobei das Netzteil und die Steuerung zumindest mittelbar an den gegenüberliegenden Seitenflächen des Quaders angeordnet sind, wobei die gegenüberliegenden Seitenflächen über die Breitenkante und die Höhenkante des Quaders aufgespannt sind. Insofern sind das Netzteil und die Steuerung in der Verlängerung der Erstreckungsrichtung der Längskante des Quaders der Motoreinheit angeordnet, was dann vorteilhaft ist, wenn die Längskante der Motoreinheit sich parallel zur Längsrichtung eines Trägerprofils des Türantriebs erstreckt. In dieser Richtung ist die Integration des Türantriebs nicht so bauraumkritisch wie in einer Querrichtung hierzu, sodass die Längskante die größte Abmessung des Quaders der Motoreinheit aufweist. Die mittelbare Anordnung des Netzteiles und/oder der Steuerung an der Motoreinheit betrifft eine Anordnung, bei der wenigstens ein weiteres Bauteil zwischen dem Netzteil und/oder der Steuerung und der Motoreinheit vorhanden ist, beispielsweise eine Halterung oder ein Flansch.

Auch ist es von Vorteil, die Motoreinheit im Verbund mit dem Netzteil und/oder der Steuerung elektrisch zu isolieren, sodass zusätzlich ein Isolierungselement an die Seitenflächen der Motoreinheit angrenzen kann.

Es ist mit weiterem Vorteil ein erstes Flanschelement vorgesehen, das an der ersten Seitenfläche angeordnet ist und das Netzteil aufnimmt und/oder dass ein zweites Flanschelement vorgesehen ist, das an der zweiten Seitenfläche angeordnet ist und die Steuerung aufnimmt. Insbesondere ist somit die Motoreinheit über die beiden Flanschelemente im Türantrieb haltend aufgenommen. Durch die Anordnung der Flanschelemente an den Seitenflächen kann die Stirnfläche frei von Befestigungsmitteln und insbesondere frei von Flanschelementen ausgeführt werden, sodass der Zahnriemen, der über die Riemenscheibe gelegt ist, frei und möglichst nah über die Stirnfläche verlaufen kann.

Der Grundkörper des Türantriebs wird mit besonderem Vorteil mit dem Trägerprofil gebildet, das beispielsweise ein L-förmiges Aluminiumprofil bildet, und die Motoreinheit kann in Bezug auf eine spätere Einbaulage so zum Trägerprofil ausgerichtet und an diesem angeordnet sein, dass die Abtriebswelle eine horizontale Erstreckung aufweist. Dadurch ergibt sich ein Verlauf des Riemens mit vertikal übereinander angeordneten Riemensträngen. Diese Ausführung ist vorteilhaft in Bezug auf die geforderte Bewegung der Flügelelemente und vorteilhaft in Bezug auf eine Integration einer Blockiereinrichtung für die Flügelelemente, die mit den Riemen in Verbindung gebracht werden.

Die Flanschelemente sind so ausgeführt, dass diese am Trägerprofil befestigt sind, sodass die Motoreinheit mittels der Flanschelemente am Trägerprofil angeordnet wird. Die Flanschelemente bilden im Stanz-Biegeverfahren hergestellte Blechbauteile, die so geformt sind, dass der Motor über seine Seitenflächen mit den Flanschelementen im Trägerprofil angebracht werden kann, und die Blechelemente nehmen zugleich auf der einen Seite der Motoreinheit das Netzteil und auf einer gegenüberliegenden Seite des Motors die Steuerung auf. Ferner können ein Bedien- und Anzeigenteil und weitere Komponenten zum Betrieb des Türantriebes mittels der Flanschelemente gleichermaßen aufgenommen werden.

Der Stator der Motoreinheit weist eine im Wesentlichen runde Grundform auf, sodass im Körper des Quaders Eckbereiche gebildet werden, in denen Schraubbohrungen zur Anordnung der Flanschelemente und/oder eine Schraubanordnung zur Verschraubung der Gehäusehälften aufeinander und/oder eine Schraubanordnung zur Verschraubung des Stators an einer der Gehäusehälften angeordnet sind. Die Ausgestaltung der Motoreinheit mit einem im Wesentlichen ringförmigen Stator und einem quaderförmigen Gehäuse ergibt somit vorteilhaft die Möglichkeit, in den Eckbereichen die Befestigungsmittel zu integrieren, sodass die Motoreinheit selbst ebenfalls eine hohe räumliche Integrationsdichte aufweist und übrige Strukturbereiche in räumlicher Hinsicht nicht ungenutzt bleiben. Die Seitenflächen können zur weiter verbesserten Entwärmung eine Rippenstruktur aufweisen, wodurch die Anbringung der Flanschelemente nicht behindert wird.

Der Stator weist ungeachtet kleinerer Abweichungen wie Schraubenaufnahmen und dergleichen eine im Wesentlichen ringförmige Grundstruktur auf und der Stator ist in wenigstens einer der Gehäusehälften so aufgenommen, dass zwischen der radialen Außenseite des Stators und dem innenseitigen Aufnahmebereich der Gehäusehälfte ein wenigstens teilweise umlaufender Wärmeübergangsspalt ausgebildet ist. Dieser Wärmeübergangsspalt ist, um als solcher zur Wärmeübergabe vom Stator in die zumindest eine oder in beide Gehäusehälften zu dienen, mit Werten von beispielsweise zwischen - 0,05 mm bis 0,1 mm ausgelegt, sodass eine Übergangspassung zwischen dem Stator und dem Aufnahmebereich des Stators in der Gehäusehälfte oder in beiden Gehäusehälften entsteht. Wärme, die im Stator durch den Betrieb der Motoreinheit entsteht, kann auf vorteilhafte Weise an die Gehäusehälften übergehen und über diese an die Umgebung abgegeben werden.

Mit weiterem Vorteil weist der Stator Flächenabschnitte auf zwei sich gegenüberliegenden Außenseiten des Quaders auf, wobei die Flächenabschnitte mit fensterartigen Aussparungen in den sich gegenüberliegenden Außenseiten des Quaders korrespondieren. Dabei ist wenigstens eines der Flächenabschnitte des Stators durch die fensterartige Aussparung hindurch in einen Wärmeübergangskontakt mit dem Trägerprofil gebracht. Alternativ oder zusätzlich kann wenigstens einer der Flächenabschnitte des Stators durch die fensterartige Aussparung hindurch in einen Wärmeübergangskontakt mit einem separaten Kühlkörper gebracht werden.

Die Türanlage kann ein Verbindungselement zum Verbinden mit einem Flügelelement aufweisen. Zusätzlich oder alternativ kann die Türanlage wenigstens ein Flügelelement, mit dem der Türantrieb antreibend in Wirkverbindung steht, aufweisen.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene des Trägerprofils, laufen. Der Riemen kann zwischen Riemenscheiben der Türanlage gespannt sein.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs einer erfindungsgemäßen Türanlage mit einer Motoreinheit, die die erfindungsgemäße Bauform aufweist,
- Fig. 2: eine perspektivische Ansicht der Motoreinheit einer erfindungsgemäßen Türanlage,
- Fig. 3: eine perspektivische Ansicht der Motoreinheit gemäß Fig. 2, wobei eine Gehäusehälfte in der Ansicht entfernt wurde und
- Fig. 4: eine Ansicht einer weiteren Gehäusehälfte der Motoreinheit mit einem Stator und einer Abtriebswelle.

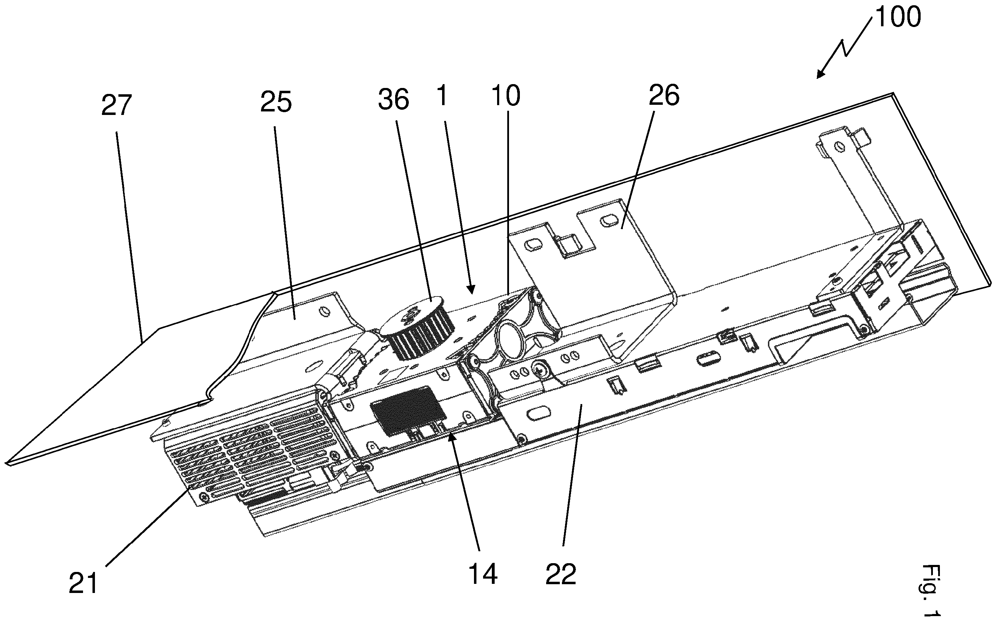

Fig. 1 zeigt eine Gesamtansicht des Türantriebs 100, wie dieser in einem Gebäude installiert werden kann, womit auch die Installation auf Schiffen und in Flugzeugen umfasst sein soll, und ein Türantrieb 100 dieser Art dient beispielsweise als Antrieb für eine automatische Schiebetüranlage. Die Grundstruktur des Türantriebs 100 bildet ein Trägerprofil 27, welches zur einfacheren Ansicht verkürzt dargestellt ist, zudem ist der wesentliche obere Teil des L-förmigen Trägerprofils 27 aufgeschnitten gezeigt, um die weiteren vorliegend wesentlichen Komponenten des Türantriebs 100 sichtbar zu machen.

Als zentraler Bestandteil weist der Türantrieb 100 eine Motoreinheit 1 auf, und die Motoreinheit 1 besitzt die Grundform eines Quaders 14, der das Gehäuse 10 der Motoreinheit 1 bildet. Um einen Abtrieb und damit eine Verbindung zu einem nicht näher dargestellten Flügelelement einer Türanlage zu ermöglichen, ist an der Motoreinheit 1 eine Riemenscheibe 36 angeordnet, über die ein Zahnriemen gelegt werden kann, mit dem schließlich die Verbindung zu dem oder den Flügelelementen, beispielsweise den Glasschiebeelementen, hergestellt wird.

Benachbart zur Motoreinheit 1 weist der Türantrieb 100 ein Netzteil 21 und eine Steuerung 22 auf, und das Netzteil 21 und die Steuerung 22 sind an sich gegenüberliegenden Seiten der Motoreinheit 1 angeordnet. Die Motoreinheit 1 ist mit einem ersten Flanschelement 25 am Trägerprofil 27 befestigt, wobei das erste Flanschelement 25 zugleich das Netzteil 21 mit aufnimmt. Weiterhin ist die Motoreinheit 1 mit einem zweiten Flanschelement 26 mit dem Trägerprofil 27 verbunden, wobei das zweite Flanschelement 26 zugleich die Steuerung 22 aufnimmt. Alternativ ist auch die Ausführung eines einzigen Flansches möglich, um wenigstens die Motoreinheit 1, das Netzteil 21 und die Steuerung 22 aufzunehmen, ferner besteht die Möglichkeit, dass die Motoreinheit, das Netzteil 21 und/oder die Steuerung 22 jeweils zugeordnete separate Flanschelemente zur Anordnung im oder am Trägerprofil 27 aufweisen.

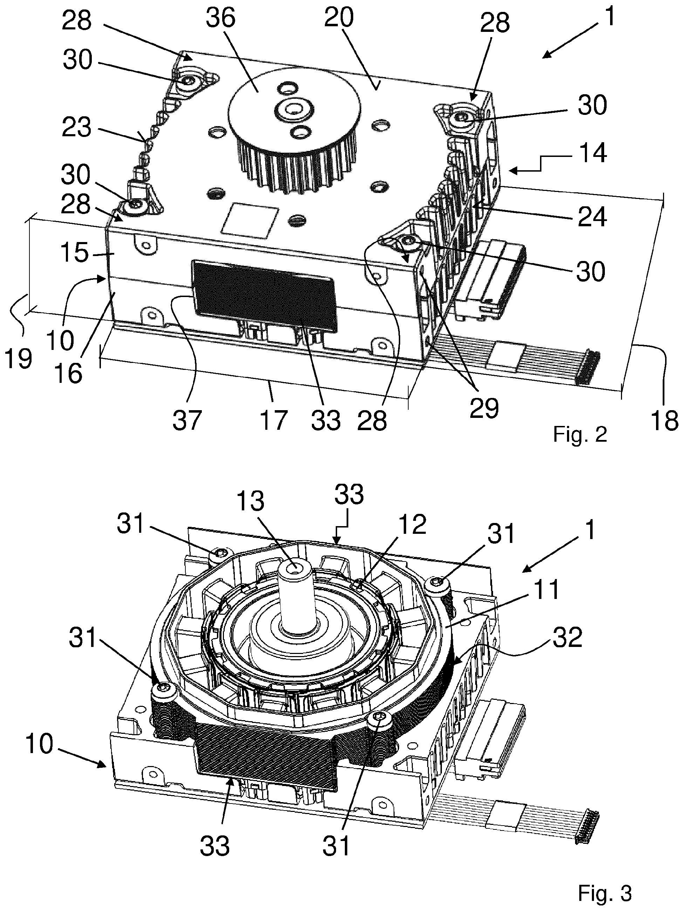

Fig. 2 zeigt eine perspektivische Ansicht der vereinzelten Motoreinheit 1 mit dem Gehäuse 10, und außerhalb des Gehäuses 10 befindet sich in der Darstellung oberseitig die Riemenscheibe 36 zur Ankopplung eines Zahnriemens oberhalb der Stirnfläche 20 des Gehäuses 10. Das Gehäuse 10 der Motoreinheit 1 weist eine erste obere Gehäusehälfte 15 und eine zweite untere Gehäusehälfte 16 auf, die beispielhaft gleichartig ausgeführt sind, im Rahmen der Erfindung aber nicht gleichartig ausgeführt sein müssen. Seitlich ist das Gehäuse 10 begrenzt durch eine erste Seitenfläche 23 und eine gegenüberliegende zweite Seitenfläche 24, und an den Seitenflächen 23 und 24 können die Flanschelemente 25 und 26 angeordnet werden, die in Fig. 1 gezeigt sind.

Der mit dem Gehäuse 10 gebildete Quader 14 weist Eckbereich 28 auf, und in den jeweiligen Eckbereichen 28 sind Schraubbohrungen 29 zur Befestigung der Flanschelemente 25, 26 mittels Schraubelementen eingebracht, von denen zwei Schraubbohrungen 29 beispielhaft beziffert sind. Weiterhin befinden sich in dem Eckbereichen Schraubanordnungen 30 zur Verschraubung der Gehäusehälften 15 und 16 miteinander.

Der Quader 14 ist bestimmt durch die Längskante 17, die Breitenkante 18 und die Höhenkante 19, wobei die Seitenflächen 23, 24 aufgespannt werden durch die Breitenkante 18 und die Höhenkante 19.

Die vorderseitige Fläche, die durch die Längskante 17 und die Höhenkante 19 aufgespannt wird, weist eine fensterförmige Aussparung 37 auf, aus der ein Flächenabschnitt 33 des in der Ansicht nicht dargestellten Stators herausragt, wobei in Zusammenhang mit dem Stator 11 auf Fig. 3 hingewiesen wird. Der nach außen weisende Flächenabschnitt 33 des Stators 11 dient zum wärmeübertragenden Kontakt mit einem weiteren Körper, beispielsweise mit dem Trägerprofil 27 oder mit einem weiteren, separaten Kühlkörper. Dadurch kann trotz des im Wesentlichen geschlossen ausgeführten Gehäuses 10 mit der oberen und unteren Gehäusehälfte 15,16 der Stator 11 in direkten wärmeübertragenden Kontakt mit einem Motorumbauteil gebracht werden.

Der Stator 11 gemäß der Darstellung in Fig. 3 ist mit der unteren Gehäusehälfte 16 mit der Schraubanordnung 31 verschraubt, und auf der Vorderseite sowie auf der Rückseite des Stators 11 befinden sich in gegenüberliegender Anordnung jeweilige Flächenabschnitte 33, die wie obenstehende beschrieben einen Flächenabschnitt der Außenhaut der Motoreinheit 1 bilden.

Durch die entnommene erste Gehäusehälfte 15 ist der Stator 11 mit dem innerhalb des Stators 11 angeordneten Rotor 12 und gezeigt, wobei der Rotor 12 einheitlich ausgebildet ist mit der Abtriebswelle 13, die aus der oberen Gehäusehälfte 15 herausgeführt ist, und der sich aus der Stirnfläche 20 des Gehäuses 10 heraus erstreckende Teil der Abtriebswelle 13 nimmt die Riemenscheibe 36 auf.

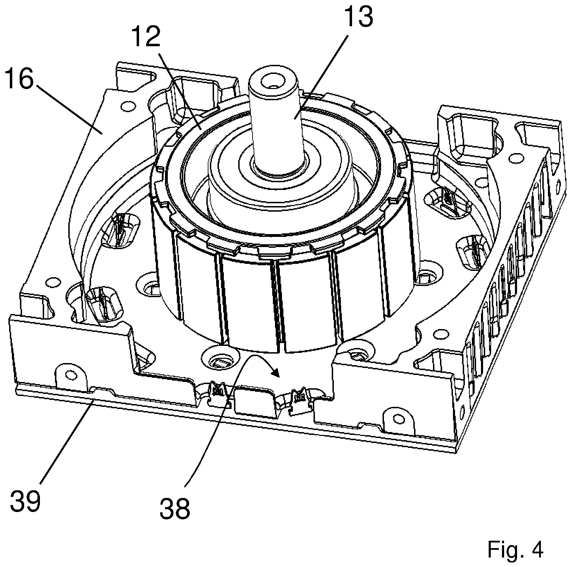

Fig. 4 zeigt in Zusammenschau mit Fig. 3 in einer weiteren Darstellung die untere Gehäusehälfte 16, wobei weiterhin der Rotor 12 mit der Abtriebswelle 13 gezeigt ist. Innerhalb der Gehäusehälfte 16, jedoch auch in nicht näher gezeigter Weise in der Gehäusehälfte 15, befindet sich ein im Wesentlichen ringförmiger Aufnahmebereich 38, in dem der Stator 11 aufgenommen ist. In Fig. 3 ist ein Wärmeübergangsspalt 32 gezeigt, der sich als zumindest teilweise umlaufender Ringspalt zwischen der Außenseite des Stators 11 und der Innenmantelfläche des Aufnahmebereiches 38 ergibt.

Wird die Motoreinheit 1 betrieben, so erwärmt sich der Stator 11 durch eine Bestromung der nicht näher gezeigten Wicklung auf dem Stator 11, und die Wärme aus dem Stator 11 kann mit dem sehr klein bemessenen Wärmeübergangsspalt 32 in die Gehäusehälften 15, 16 übergehen. Der Wärmeübergangsspalt 32 ist dabei vorteilhafterweise als Übergangspassung ausgeführt. Auf der der Stirnseite 20 gegenüberliegenden Rückseite des Quaders 14 befindet sich eine Leiterkarte 39, auf der Leiterbahnen angeordnet sind, die insbesondere zur Kontaktierung und Beschaltung der Wicklung des Stators 11 dienen. Die Leiterkarte 39 ist dabei mit Haltelementen am Gehäuse 10 der Motoreinheit 1 befestigt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, solange sie im Rahmen des von den Patentansprüchen gesteckten Schutzbereichs liegen.

### Bezugszeichenliste

- 100: Türantrieb

- 1: Motoreinheit

- 10: Gehäuse
- 11: Stator
- 12: Rotor
- 13: Abtriebswelle
- 14: Quader
- 15: Gehäusehälfte
- 16: Gehäusehälfte
- 17: Längskante
- 18: Breitenkante
- 19: Höhenkante
- 20: Stirnfläche
- 21: Netzteil
- 22: Steuerung
- 23: Seitenfläche
- 24: Seitenfläche
- 25: erstes Flanschelement
- 26: zweites Flanschelement
- 27: Trägerprofil
- 28: Eckbereich
- 29: Schraubbohrung
- 30: Schraubanordnung
- 31: Schraubanordnung
- 32: Wärmeübergangsspalt
- 33: Flächenabschnitt
- 34: Außenseite
- 35: Aussparung
- 36: Riemenscheibe
- 37: fensterförmige Aussparung
- 38: Aufnahmebereich
- 39: Leiterkarte

## Patentansprüche

1. Türanlage mit einem Türantrieb (100) aufweisend wenigstens ein Verbindungselement zum Verbinden mit einem Flügelelement und/oder wenigstens ein Flügelelement, mit dem der Türantrieb (100) antreibend in Wirkverbindung steht, wobei mit dem Türantrieb (100) das zumindest eine Flügelelement der Türanlage bewegbar ist, wobei der Türantrieb (100) eine Motoreinheit (1) mit einem Gehäuse (10) aufweist, in dem ein Stator (11) ruhend aufgenommen ist und wobei ein Rotor (12) drehbeweglich im Gehäuse (10) angeordnet ist, der eine Abtriebswelle (13) aufweist, wobei die Abtriebswelle (13) mit dem Flügelelement antreibend in Wirkverbindung bringbar ist,
wobei die Motoreinheit (1) die Grundform eines Quaders (14) aufweist, der wenigstens mittels zweier miteinander verbundener Gehäusehälften (15, 16) gebildet ist, und wobei der Stator (11) und der Rotor (12) innenseitig zwischen den Gehäusehälften (15, 16) aufgenommen sind, **dadurch gekennzeichnet, dass** die Gehäusehälften (15, 16) schalenartig ausgeführt sind und unmittelbar aneinander anliegen, sodass ein umlaufender etwa rechteckförmiger Rand der jeweiligen Gehäusehälfte aufeinander gefügt ist, und wobei der Quader (14) eine Längskante (17), eine Breitenkante (18) und eine Höhenkante (19) aufweist, wobei die Längskante (17) größer ist als die Breitenkante (18) und/oder wobei die Breitenkante (18) größer ist als die Höhenkante (19).

2. Türanlage nach Anspruch 1, **dadurch gekennzeichnet, dass** die Breitenkante (18) eine Länge von 70% bis 98% und/oder 85% bis 95% der Länge der Längskante (17) aufweist und/oder dass die Höhenkante (19) eine Länge von 30% bis 60% und/oder 40% bis 50% der Länge der Längskante (17) aufweist.

3. Türanlage nach Anspruch 1 oder 2, **dadurch gekennzeichnet, dass** die Längskante (17) und die Breitenkante (18) eine Stirnfläche (20) aufspannen, wobei die Abtriebswelle (13) senkrecht aus der Stirnfläche (20) hervorsteht.

4. Türanlage nach einem der vorgenannten Ansprüche, **dadurch gekennzeichnet, dass** wenigstens ein Netzteil (21) und eine Steuerung (22) vorhanden sind, wobei das Netzteil (21) und die Steuerung (22) zumindest mittelbar an gegenüberliegenden Seitenflächen (23, 24) des Quaders (14) angeordnet sind, wobei die gegenüberliegenden Seitenflächen (23, 24) über die Breitenkante (18) und die Höhenkante (19) des Quaders (14) aufgespannt sind.

5. Türanlage nach einem der vorgenannten Ansprüche, **dadurch gekennzeichnet, dass** ein erstes Flanschelement (25) vorgesehen ist, das an einer ersten Seitenfläche (24) angeordnet ist und das Netzteil (21) aufnimmt und/oder dass ein zweites Flanschelement (26) vorgesehen ist, das an einer zweiten Seitenfläche (24) angeordnet ist und die Steuerung (22) aufnimmt, wobei die Motoreinheit (1) über die beiden Flanschelemente (25, 26) im Türantrieb (100) haltend aufgenommen ist.

6. Türanlage nach einem der vorgenannten Ansprüche, **dadurch gekennzeichnet, dass** ein Grundkörper des Türantriebes (100) mittels eines Trägerprofils (27) gebildet ist, wobei die Motoreinheit (1) in Bezug auf eine spätere Einbaulage so zum Trägerprofil (27) ausgerichtet ist, dass die Abtriebswelle (13) eine horizontale Erstreckung aufweist.

7. Türanlage nach Anspruch 6, **dadurch gekennzeichnet, dass** die Flanschelemente (25, 26) am Trägerprofil (27) befestigt sind, sodass die Motoreinheit (1) mittels der Flanschelemente (25, 26) am Trägerprofil (27) angeordnet ist.

8. Türanlage nach einem der vorgenannten Ansprüche, **dadurch gekennzeichnet, dass** der Stator (11) eine im Wesentlichen runde Grundform aufweist, sodass im Quader (14) Eckbereiche (28) gebildet sind, in denen Schraubbohrungen (29) zur Anordnung der Flanschelemente (25, 26) und/oder eine Schraubanordnung (30) zur Verschraubung der Gehäusehälften (15, 16) aufeinander und/oder eine Schraubanordnung (31) zur Verschraubung des Stators (11) an einer der Gehäusehälften (15, 16) angeordnet sind.

9. Türanlage nach einem der vorgenannten Ansprüche, **dadurch gekennzeichnet, dass** der Stator (11) eine ringförmige Grundstruktur aufweist und in wenigstens einer der Gehäusehälften (15, 16) aufgenommen ist, wobei zwischen der radialen Außenseite des Stators (11) und der Innenseite der Gehäusehälfte (15, 16) ein wenigstens teilweise umlaufender Wärmeübergangsspalt (32) ausgebildet ist.

10. Türanlage nach einem der vorgenannten Ansprüche, **dadurch gekennzeichnet, dass** der Stator (11) Flächenabschnitte (33) auf sich gegenüberliegenden Außenseiten (34) des Quaders (14) aufweist, wobei die Flächenabschnitte (33) mit fensterartigen Aussparungen (35) in den sich gegenüberliegenden Außenseiten (34) des Quaders (14) korrespondieren.

11. Türanlage nach Anspruch 10, **dadurch gekennzeichnet, dass** wenigstens einer der Flächenabschnitte (33) des Stators (11) durch die fensterartige Aussparung (35) hindurch in einen Wärmeübergangskontakt mit dem Trägerprofil (27) gebracht ist.

12. Türanlage nach Anspruch 10 oder 11, **dadurch gekennzeichnet, dass** wenigstens einer der Flächenabschnitte (33) des Stators (11) durch die fensterartige Aussparung (35) hindurch in einen Wärmeübergangskontakt mit einem separaten Kühlkörper gebracht ist.

## Claims

1. A door system with a door drive (100) having at least one connecting element for connection to a leaf element and/or at least one leaf element to which the door drive (100) is operatively connected in a driving manner, wherein the at least one leaf element of the door system can be moved with the door drive (100), wherein the door drive (100) has a motor unit (1) with a housing (10), in which a stator (11) is accommodated in a stationary manner and wherein a rotor (12) is arranged in the housing (10) so as to be rotatably movable and has an output shaft (13), wherein the output shaft (13) can be brought into operative connection with the leaf element in a driving manner, wherein the motor unit (1) has the basic shape of a cuboid (14), which is formed at least by means of two housing halves (15, 16) connected to one another, and wherein the stator (11) and the rotor (12) are accommodated on the inside between the housing halves (15, 16), **characterised in that** the housing halves (15, 16) are configured in a shell-like manner and rest directly against one another such that a circumferential, approximately rectangular edge of the respective housing half is joined together, and wherein the cuboid (14) has a longitudinal edge (17), a lateral edge (18) and a vertical edge (19), wherein the longitudinal edge (17) is larger than the lateral edge (18) and/or wherein the lateral edge (18) is larger than the vertical edge (19).

2. The door system according to claim 1, **characterised in that** the lateral edge (18) has a length of 70% to 98% and/or 85% to 95% of the length of the longitudinal edge (17) and/or **in that** the vertical edge (19) has a length of 30% to 60% and/or 40% to 50% of the length of the longitudinal edge (17).

3. The door system according to claim 1 or 2, **characterised in that** the longitudinal edge (17) and the lateral edge (18) span an end face (20), wherein the output shaft (13) projects perpendicularly from the end face (20).

4. The door system according to one of the preceding claims, **characterised in that** at least one power supply unit (21) and one control unit (22) are present, wherein the power supply unit (21) and the control unit (22) are arranged at least indirectly on opposite side faces (23, 24) of the cuboid (14), wherein the opposite side faces (23, 24) are spanned over the lateral edge (18) and the vertical edge (19) of the cuboid (14).

5. The door system according to one of the preceding claims, **characterised in that** a first flange element (25) is provided, which is arranged on a first side surface (24) and accommodates the power supply unit (21) and/or **in that** a second flange element (26) is provided, which is arranged on a second side surface (24) and accommodates the control unit (22), wherein the motor unit (1) is accommodated in the door drive (100) and held via the two flange elements (25, 26).

6. The door system according to one of the preceding claims, **characterised in that** a base body of the door drive (100) is formed by means of a support profile (27), wherein the motor unit (1) is aligned with respect to a subsequent installation position relative to the support profile (27) such that the output shaft (13) has a horizontal extension.

7. The door system according to claim 6, **characterised in that** the flange elements (25, 26) are fastened to the support profile (27) such that the motor unit (1) is arranged on the support profile (27) by means of the flange elements (25, 26).

8. The door system according to one of the preceding claims, **characterised in that** the stator (11) has a substantially round basic shape such that in the cuboid (14) are formed corner regions (28) in which are arranged screw holes (29) for arranging the flange elements (25, 26) and/or a screw arrangement (30) for screwing the housing halves (15, 16) to one another and/or a screw arrangement (31) for screwing the stator (11) to one of the housing halves (15, 16).

9. The door system according to one of the preceding claims, **characterised in that** the stator (11) has an annular basic structure and is accommodated in at least one of the housing halves (15, 16), wherein an at least partially circumferential heat transfer gap (32) is designed between the radially outer side of the stator (11) and the inner side of the housing half (15, 16).

10. The door system according to one of the preceding claims, **characterised in that** the stator (11) has surface sections (33) on opposite outer sides (34) of the cuboid (14), wherein the surface sections (33) correspond to window-like recesses (35) in the opposite outer sides (34) of the cuboid (14).

11. The door system according to claim 10, **characterised in that** at least one of the surface sections (33) of the stator (11) is brought into heat transfer contact with the support profile (27) through the window-like recess (35).

12. The door system according to claim 10 or 11, **characterised in that** at least one of the surface sections (33) of the stator (11) is brought into heat transfer contact with a separate heat sink through the window-like recess (35).

## Revendications

1. Ensemble de porte comportant un entraînement de porte (100) présentant au moins un élément de liaison pour la liaison avec un élément de battant et/ou au moins un élément de battant avec lequel l'entraînement de porte (100) est en liaison active d'entraînement, dans lequel l'entraînement de porte (100) permet de déplacer l'au moins un élément de battant de l'ensemble de porte, dans lequel l'entraînement de porte (100) présente une unité de moteur (1) comportant un boîtier (10) dans lequel un stator (11) est logé au repos et dans lequel un rotor (12) est agencé de manière mobile en rotation dans le boîtier (10), lequel rotor présente un arbre de sortie (13), dans lequel l'arbre de sortie (13) peut être mis en liaison active avec l'élément de battant pour l'entraîner, dans lequel l'unité de moteur (1) présente la forme basique d'un parallélépipède (14), qui est formé au moins au moyen de deux moitiés de boîtier (15, 16) reliées l'une à l'autre, et dans lequel le stator (11) et le rotor (12) sont logés côté intérieur entre les moitiés de boîtier (15, 16), **caractérisé en ce que** les moitiés de boîtier (15, 16) sont réalisées en forme de coque et s'appuient directement l'une contre l'autre, de sorte qu'un bord périphérique à peu près rectangulaire de la moitié de boîtier respective est assemblé l'un sur l'autre, et dans lequel le parallélépipède (14) présente un bord longitudinal (17), un bord de largeur (18) et un bord de hauteur (19), dans lequel le bord longitudinal (17) est plus grand que le bord de largeur (18) et/ou dans lequel le bord de largeur (18) est plus grand que le bord de hauteur (19).

2. Ensemble de porte selon la revendication 1, **caractérisé en ce que** le bord de largeur (18) présente une longueur de 70 % à 98 % et/ou de 85 % à 95 % de la longueur du bord longitudinal (17) et/ou **en ce que** le bord de hauteur (19) présente une longueur de 30 % à 60 % et/ou de 40 % à 50 % de la longueur du bord longitudinal (17).

3. Ensemble de porte selon la revendication 1 ou 2, **caractérisé en ce que** le bord longitudinal (17) et le bord de largeur (18) s'étendent sur une surface frontale (20), dans lequel l'arbre de sortie (13) fait saillie verticalement de la surface frontale (20).

4. Ensemble de porte selon l'une des revendications précédentes, **caractérisé en ce qu'**au moins un bloc d'alimentation (21) et une commande (22) sont présents, dans lequel le bloc d'alimentation (21) et la commande (22) sont agencés au moins indirectement sur des surfaces latérales (23, 24) opposées du parallélépipède (14), dans lequel les surfaces latérales (23, 24) opposées sont recouvertes sur le bord de largeur (18) et le bord de hauteur (19) du parallélépipède (14).

5. Ensemble de porte selon l'une des revendications précédentes, **caractérisé en ce qu'**un premier élément de bride (25) est prévu, qui est agencé sur une première surface latérale (24) et reçoit le bloc d'alimentation (21) et/ou en ce qu'un second élément de bride (26) est prévu, qui est agencé sur une seconde surface latérale (24) et reçoit la commande (22), dans lequel l'unité de moteur (1) est reçue en étant maintenue dans l'entraînement de porte (100) par les deux éléments de bride (25, 26).

6. Ensemble de porte selon l'une des revendications précédentes, **caractérisée en ce qu'**un corps basique de l'entraînement de porte (100) est formé au moyen d'un profilé porteur (27), dans lequel l'unité de moteur (1) est orientée par rapport au profilé porteur (27), par rapport à une position de montage ultérieure, de telle sorte que l'arbre de sortie (13) présente une extension horizontale.

7. Ensemble de porte selon la revendication 6, **caractérisé en ce que** les éléments de bride (25, 26) sont fixés au profilé porteur (27), de telle sorte que l'unité de moteur (1) est agencée sur le profilé porteur (27) au moyen des éléments de bride (25, 26).

8. Ensemble de porte selon l'une des revendications précédentes, **caractérisée en ce que** le stator (11) présente une forme basique sensiblement ronde, de telle sorte que dans le parallélépipède (14) sont formées des zones de coin (28) dans lesquelles sont agencés des trous de vissage (29) pour l'agencement des éléments de bride (25, 26) et/ou un agencement de vissage (30) pour le vissage des moitiés de boîtier (15, 16) l'une sur l'autre et/ou un agencement de vissage (31) pour le vissage du stator (11) sur l'une des moitiés de boîtier (15, 16).

9. Ensemble de porte selon l'une des revendications précédentes, **caractérisé en ce que** le stator (11) présente une structure basique annulaire et est logé dans au moins une des moitiés de boîtier (15, 16), dans lequel une fente de transfert de chaleur (32) au moins partiellement périphérique est formée entre le côté extérieur radial du stator (11) et le côté intérieur de la moitié de boîtier (15, 16).

10. Ensemble de porte selon l'une des revendications précédentes, **caractérisé en ce que** le stator (11) présente des sections de surface (33) sur des côtés extérieurs (34) opposés du parallélépipède (14), dans lequel les sections de surface (33) correspondent à des évidements (35) en forme de fenêtre dans les côtés extérieurs (34) opposés du parallélépipède (14).

11. Ensemble de porte selon la revendication 10, **caractérisé en ce qu'**au moins l'une des sections de surface (33) du stator (11) est amenée en contact de transfert de chaleur avec le profilé porteur (27) à travers l'évidement (35) en forme de fenêtre.

12. Ensemble de porte selon la revendication 10 ou 11, **caractérisé en ce qu'**au moins l'une des sections de surface (33) du stator (11) est amenée en contact de transfert de chaleur avec un corps de refroidissement séparé à travers l'évidement (35) en forme de fenêtre.
